# EUROPEAN PATENT APPLICATION

(11) **EP 1 152 163 A2**
(43) Date of publication of application: **07.11.2001**
(21) Application number: 01303881.5
(22) Date of filing: 27.04.2001
(51) Int. Cl.: F16D 41/07

(54) **Rotary coupling**

(30) Priority: 05.05.2000 GB 0010776
(71) Applicant: Samar Systems Limited, Coleford, Gloucestershire GL16 8AL (GB)
(72) Inventor: Montanana, Raul, Lydbrook, Gloucestershire GL17 9RE (GB)
(74) Representative: Higgins, Michael Roger

(57) **Abstract**

A rotary coupling comprises a driving part 10 and a driven part 12, for transmission of driving torque between them; a fixed part 14 in which the driving and driven parts 10,12 are each rotatable coaxially; and a set of coupling members 52. The coupling members 52 are carried by the driving part 10 and are seated in recesses 50 in the driven part 12 so as to be in torque-transmitting engagement therewith. The coupling members 52 are juxtaposed to an annular braking surface 14a of the fixed part 14, and can independently move into and out of engagement with the braking surface 14a. A driving torque, applied by the driving part 10 to the coupling members 52, is transmitted by the latter to the driven part 12 without the coupling members 52 engaging the braking surface 14a. A reverse torque, applied by the driven part 12 to the coupling members 52, moves the latter into wedging engagement with the braking surface 14a, locking up the coupling.

## Description

This invention relates to rotary couplings, for transmitting rotary motion from a driving part to a driven part, i.e. for transmitting a driving torque.

The purpose of the invention is to provide a simple rotary coupling for use in applications where a reverse torque must not be transmitted to the driving side. By a reverse torque we mean a torque applied externally to the driven part of the coupling. In this connection the actual direction of rotation, clockwise or anti-clockwise, is immaterial; the invention is concerned with rotary couplings which are not restricted as to the direction of rotation; rather, it provides a coupling in which torque is freely transmitted from the driving side to the driven side but not vice versa.

According to the present invention, there is provided a rotary coupling comprising a driving part and a driven part, for transmission of driving torque between them; a fixed part in which the driving and driven parts are each rotatable coaxially; and a set of coupling members each having a circular or substantially circular transverse cross-section, the coupling members being carried by the driving part and being seated in recesses in the driven part so as to be in torque-transmitting engagement therewith, the coupling members being juxtaposed to an annular braking surface of the fixed part, each coupling member being free to independently move, with respect to the driving and driven parts, into and out of engagement with the braking surface, and the arrangement being such that a driving torque, applied by the driving part to the coupling members, is transmitted by the latter to the driven part without engagement of the coupling members with the braking surface; but a reverse torque, applied by the driven part to the coupling members, tends to move the latter into wedging engagement with the braking surface so as to lock up the coupling.

The coupling of the invention is simple and robust, and can be used in a very wide variety of applications, for example powered wheelchairs, winches, roller blinds, wheel-actuated rudders for boats and ships, and any land vehicle having a rotary transmission for driving torque between an input side and an output side, in which the coupling can for example conveniently be incorporated in the propeller shaft.

It is to be understood that the driving part could be rotated by a power drive or it could be rotated manually.

Preferred and/or optional features of the invention are set out in claims 2 to 15.

The present invention will now be described, by way of non-limiting examples only and with reference to the accompanying drawings, in which:
Figure 1 is a simplified view of the coupling in cross-section taken on the line I-I in Figure 2;
Figure 2 is a view in cross section on the line II-II in Figure 1 which, to aid clarity, omits roller retaining circlips shown in Figure 1;
Figure 2a is an exaggerated scrap view in cross section on the line III-III in Figure 1;
Figure 3 is an exaggerated scrap view in cross section on the line III-III in Figure 1, with a modification to the coupling rollers shown diagrammatically;
Figure 4 is a view of a second embodiment of the coupling;
Figure 5 is an end view along the input shaft of the coupling shown in Figure 4; and
Figure 6 shows a modification to the second embodiment.

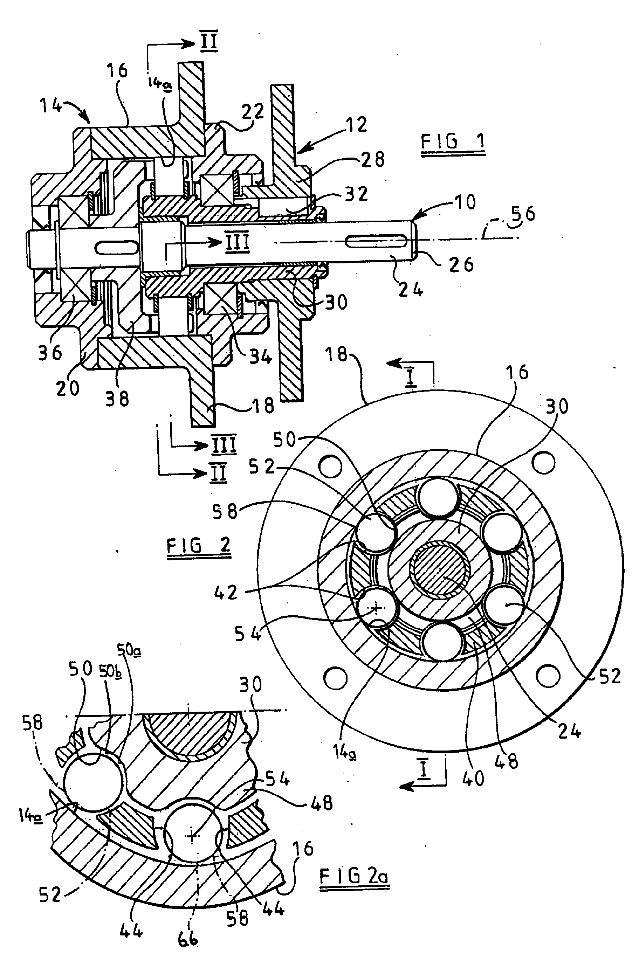

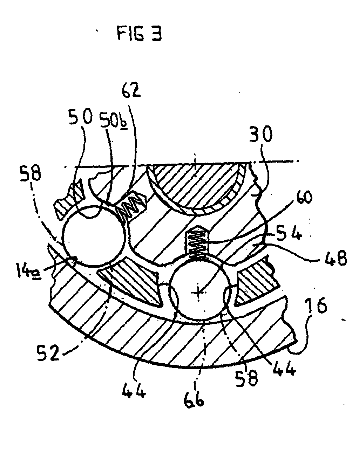

A first embodiment of the coupling is shown in Figures 1, 2 and 2a and a modification to the first embodiment is shown in Figure 3. The coupling comprises a driving part 10 and a driven part 12, for continuous transmission, in normal operation, of a driving torque from the driving part to the driven part. The coupling also has a fixed part 14 in which the driving and driven parts 10 and 12 are each rotatable coaxially on a main axis 56 of the coupling.

The fixed part 14 in this example comprises an open-ended cylindrical body 16 having a fastening flange 18 by which the coupling is secured to the vehicle or other appliance, which will be taken to be a winch in this example. One end of the body 16 is closed by an end cap 20 and the other by an end cap 22. The body 16 and its two end caps are secured together by suitable fastening means, not shown, for example by bolts and nuts and/or studs.

The driven part 12 of the coupling comprises a face plate 28 which is suitably coupled to the winch drum (not shown). The driven part 12 also includes an output sleeve 30, to which the face plate 28 is attached, for example by means of a key 32, the output sleeve 30 being mounted coaxially in a bearing 34 in the end cap 22 of the fixed part 14.

The driving part 10 of the coupling comprises a driving shaft, or input shaft, 24 having a projecting portion 26 which is coupled to the power drive, not shown, of the winch. The shaft 24 extends coaxially through the output sleeve 30, so as to be supported indirectly by the bearing 34 in the fixed part 14 and directly in a further bearing 36 in the end cap 20. The driving part 10 is completed by a planet carrier 38 keyed on the shaft 24.

The carrier 38 includes a coaxial, integral, annular ring 40 which is interrupted by a number of seatings 42, each having two opposed thrust surfaces 44 as shown in Figures 2a and 3. Each thrust surface 44 is generally in the form of an arc of a circle. As shown in Figures 2a and 3, the outer perimeter of the ring 40 lies just radially inside the axial bore of the body 16, which constitutes a braking surface 14a as will be seen below. The ring 40 surrounds a radial flange 48 which is an integral part of the output sleeve 30. The flange 48 is formed with curved or concave seating recesses 50 which are open towards the corresponding seatings 42.

Thus, the driving part 10 and the driven part 12 of the coupling, coaxial with each other, are rotatable one within the other, and are both rotatable coaxially within the fixed part 14.

The driving and driven parts 10 and 12 are coupled together by means of a set of coupling members 52. These are arranged in a planetary array around the output sleeve 30. Although, in this example, each coupling member 52 is a roller, each coupling member 52 may equally be a ball bearing similar to a second embodiment of the invention described later.

Each roller 52 is cylindrical and has a circular or substantially circular transverse cross-section. A cylinder axis 54 of each roller 52 is parallel to the axis 56 of the coupling itself and a part of the surface 58 of each roller 52 faces radially outwards towards the braking surface 14a. In this example each surface 58 is of arcuate cross-section, with a slightly smaller radius than the braking surface 14a, and as we shall see, it constitutes a wedging surface 66 under certain conditions.

It will be noted that the cylinder axis 54 of each roller 52 lies on a pitch circle which is intermediate between the inner and outer perimeters of the ring 40.

Thus, in normal operation when a torque is being transmitted from the driving part 10 to the driven part 12, this torque is transmitted to the rollers 52 by the ring 40, through the appropriate thrust surfaces 44 (depending on the direction of rotation), in the form of a generally tangential thrust in a radial zone (generally defined by the surface, 44), so that this thrust is close to, and/or passes through, the axis 54 of each roller. The thrust surfaces 44 may be shaped, as can be seen in Figures 2a and 3, to lie at an angle to the surface 58 of the rollers 52. This enables point contact between the thrust surfaces 44 and the respective rollers 52. This point contact allows the orientation of the thrust imparted by the thrust surfaces 44 to the rollers 52 to be controlled and thus improve the performance of the coupling.

The rollers 52 project radially inwards from the ring 40 to engage, in another radial zone, in the seating recesses 50 of the output sleeve, thereby transmitting the torque to the driven part 12 of the coupling. Referring to Figure 2a, which along with Figure 3 is exaggerated for clarity, the base 50a of each seating recess 50 is arcuately formed with a radius that matches that of the rollers 52. The surface portions 50b of the seating recess 50 adjoining the base 50a present cam forms such that, when taken in cross-section, the profile of each seating recess 50 is part-sinusoidal.

In a normal stationary configuration, each roller lies in a generally radially symmetrical attitude in its seating 42 as indicated at 52 in Figures 2a and 3. The wedging surfaces 66 are out of contact with the braking surface 14a.

If on the other hand a net reverse torque is applied (for example by the load on the winch in a runaway condition) externally to the driven part 12 of the coupling, this reverse torque is transmitted to the coupling members 52 through the seating recesses 50. The radial engagement zone of the coupling members 52 with the driven part is substantially further from the roller axis 54 than the radial zone in which the forward thrust is applied by the surfaces 44 in the normal driving mode. A turning moment is therefore applied to the rollers 52 by the thrust surfaces (seating recesses) 50 as the rollers 52 move along the base 50a and the surface portions 50b. This induces movement about the axes 54, which are therefore moment axes, causing the rollers 52 to ride up one or other thrust surface 44 (depending on the direction of rotation of the coupling). This forces the wedging surfaces 66 against the braking surface 14a, thus tending to lock up the coupling by passing the reverse torque directly to the fixed coupling part 14 and not to the input part 10.

The part-sinusoidal profile of each seating recess 50 retains the rollers 52 locally so as to create a near instantaneous mechanical connection between the rollers 52, the driven part 12 and the fixed part 14. Also, the seating recesses 50 impart a radial load progressively to the rollers 52 when a net reverse torque is applied to the driven part 12. Moreover, engagement of the rollers 52 within the seating recesses 50 causes a definite rotation of the rollers as they move into wedging contact with the braking surface 14a. overall, this will give a near instantaneous lock and release and there will be minimal backlash on the driven part when changing direction. Also, the geometry of the seating recesses 50 will maximise the mechanical transfer of output side torque to radial load between the rollers 52 and the braking surface 14a.

Figure 3 includes a modification to the first embodiment. In order to ensure that, once any reverse torque is removed, the coupling members 52 will retract from their wedging engagement with the braking surface 14a, light tension springs 60 may be used to engage the backs of the rollers 52 to bias the latter away from the fixed part 14. These springs 60 would be mounted in radial seatings 62 in the output sleeve 30.

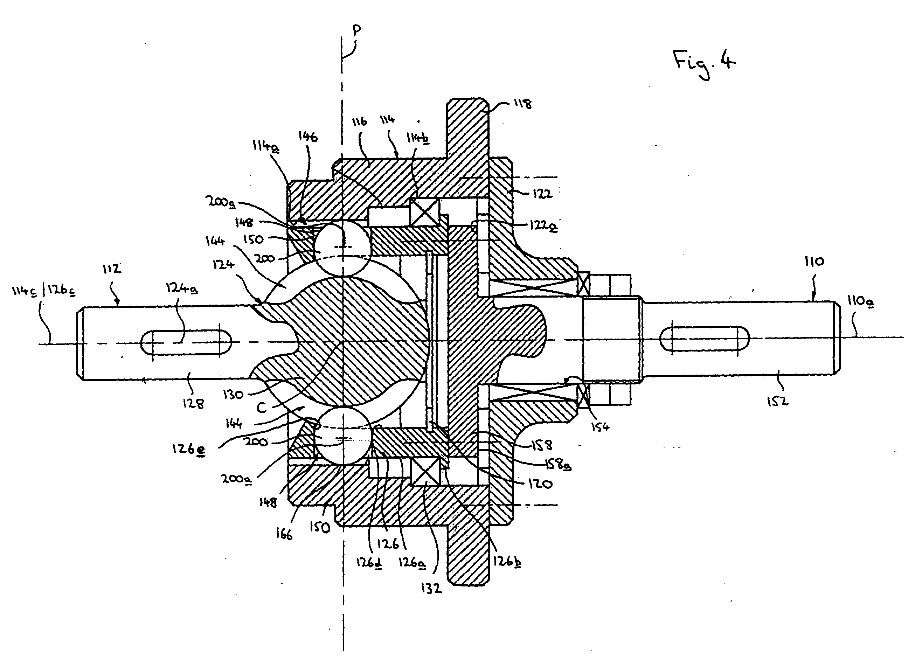

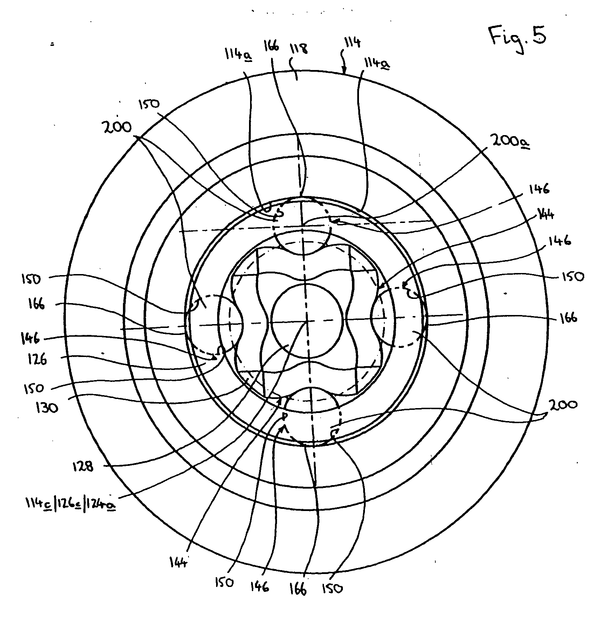

Referring now to Figures 4 and 5 of the drawings, the second embodiment of the coupling of the present invention is shown therein. Detailed descriptions of parts similar to the first embodiment will be omitted.

The coupling of the second embodiment comprises a driving part 110, a driven part 112, and fixed part 114 within which the driving and driven parts 110 and 112 are rotatable.

The fixed part 114 in this example comprises an open-ended cylindrical body 116 having a fastening flange 118 by which the coupling is secured to a vehicle or other appliance. One end of the body 116 is closed by an end cap 122. The body 116 and its end cap 122 are secured together by suitable fastening means (not shown), for example, by bolts and nuts and/or studs.

The cylindrical body 116 of the fixed part 114 has an axial bore with a braking surface 114a, an inwardly projecting annular shoulder 114b, and a cylinder axis 114c coaxial with the rotational axis 110a of the driving part 110.

The driven part 112 comprises a universal joint, typically in the form of a constant velocity (C.V.) joint, which includes an output shaft 124.

The driving part 110 comprises an input shaft 152 and cylindrical cage 126. The input shaft 152 is, at one end, received for rotation through opening 154 in face plate 122 of the fixed part 114 and, at the other end, is coupled to the driving mechanism of the vehicle or appliance. A flange 158 is integrally formed at the one end of the input shaft 152. The flange 158 is disposed for rotation within the fixed part 114 and is fixed to the cage 126. A bearing surface 158a of the flange 158 bears against bearing surface 122a of the face plate 122 of the fixed part 114.

The cage 126 includes external surface 126a, flange 126b which in this embodiment opposes shoulder 114b of fixed part 114, rotational axis 126c coaxial with cylinder axis 114c of the fixed part 114, and inner cylindrical surface 126d. Bearing 132, interposed between the cage 126 and the fixed part 114, abuts the flange 126b and the shoulder 114b such that the surface 126a and the surface of the axial bore of the fixed part 114 mutually bear thereagainst.

The cage 126 comprises planet carrier 146 having a set of seatings 148 disposed circumferentially therearound and symmetrically about a plane P, which extends perpendicularly to the axis 126c. Each seating 148 includes two generally opposed, part-cylindrical thrust surfaces 150 (best seen in Figure 5).

The output shaft 124 of the driven part 112 includes elongate part 128, typically projecting externally from the fixed part 114, and ball end 130 integral therewith. The ball end 130 is received for rotation within the cage 126 and is held in place between shoulder 126e formed at one end of the cage 126 and a retaining element 120 engaged with the cage 126.

The output shaft 124 has an axis of rotation 124a and can pivot about a pivot point C. Pivot point C is coincident or substantially coincident with the spherical centre of the ball end 130, the perpendicular plane P, and axes 114c and 126c of fixed part 114 and cage 126.

The ball end 130 comprises recesses in the form of elongate channels 144, each of which is arcuately formed in such a manner that a plane that bisects the longitudinal extent of the respective channel 144 also has the axis 124a of the output shaft 124 lying thereon. Each channel 144 is also formed as part-sinusoidal (mirroring the thrust surfaces 50 of the first embodiment) when seen in cross-section parallel to plane P (best seen in Figure 5).

The driving part 110 and the driven part 112 are coupled together by means of a set of coupling members 200, typically being spherical or substantially spherical ball bearings. These are carried by the planet carrier 146, engaging the seatings 148 in a first radial engagement zone, and project inwards towards the ball end 130 of the C.V. joint to engage the channels 144 in a second radial engagement zone.

By the configuration of the channels 144, each coupling member 200 can engage the ball end 130 in such a manner as to not only be able to run along a respective channel 144 in parallel to axis 124a (being movement in a first dimension relative to the ball end 130), but also to be able to move independently within the plane P by riding up one or other side of the trough of the channel 144 (being movement in a second dimension relative to the ball end 130), under certain conditions to be described hereinafter.

A part of each coupling member 200 also projects radially outwards from the seating 148 towards the braking surface 114a of the fixed part 114. The surface of this part of each coupling member 200, under certain conditions, constitutes a wedging surface 166. The wedging surface 166 is of smaller radius that the braking surface 114a.

In normal operation, when a torque is being transmitted from the driving part 110 to the driven part 112, this torque is transmitted from the flange 158 to the cage 126 fixed thereto. The torque is then transmitted to the coupling members 200 by the seatings 148 of the planet carrier 146 of the cage 126, through the appropriate thrust surfaces 150 (depending on the direction of rotation), in the form of a generally tangential thrust in the region of the first radial engagement zone (generally defined by the surfaces 150). This tangential thrust passes through or substantially through a spherical centre 200a of each coupling member 200.

Since the coupling members 200 engage the ball end 130 in the second radial engagement zone, the torque is transmitted to the driven part 112 of the coupling via the channels 144.

In this normal configuration, each coupling member 200 lies generally at the lowest point of the trough of its channel 144, and it should be noted that the wedging surfaces 166 of the coupling members 200 are out of contact or substantially out of contact with the braking surface 114a.

On the other hand, if a net reverse torque is applied externally to the driven part 112 of the coupling, this reverse torque is transmitted to the coupling members 200 through the channels 144. Since the second radial engagement zone of the coupling members 200 with the ball end 130 is substantially further from the spherical centres 200a of the coupling members 200 than the first radial engagement zone of the coupling members 200 with the seatings 148 of the cage 126, and since the reverse torque includes a substantially resultant tangential thrust applied by the sides of the channels 144 on the coupling members 200 at the second radial engagement zone, a turning moment is generated about the spherical centres 200a of the coupling members 200 which tends to independently move the coupling members 200 up one or other side of the channels 144 (depending on the direction of the applied reverse torque), thereby bringing the wedging surfaces 166 of the coupling members 200 into engagement with the braking surface 114a of the fixed part 114. This movement of the coupling members 200 tends to lock up the coupling, in a similar fashion to the first embodiment.

Although ball bearings 200 are used in this second embodiment, rollers similar to the first embodiment could be utilised instead. However, use of such rollers will limit the amount of pivotable movement available to the output shaft 124 of the driven part 112.

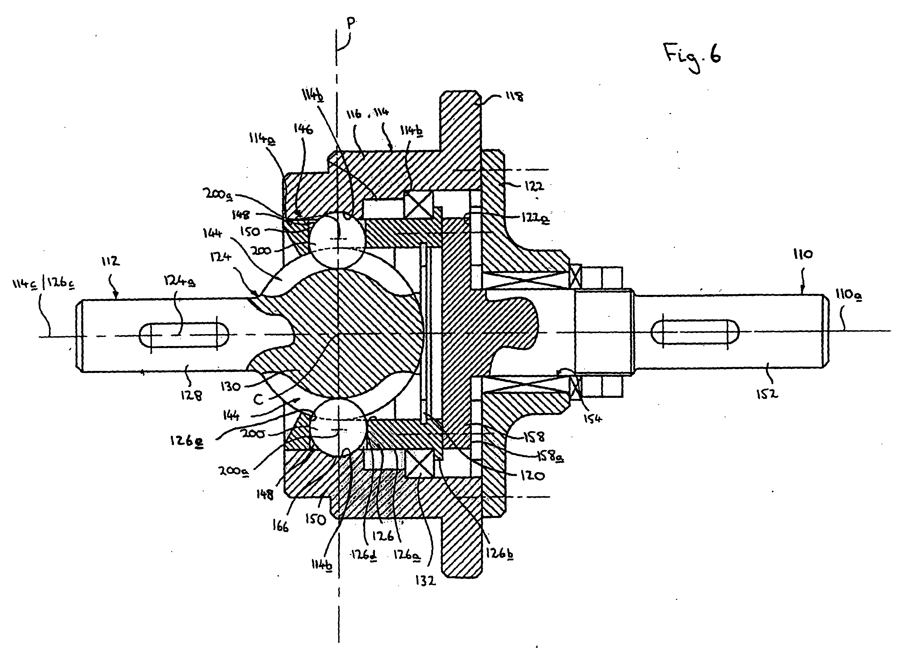

Referring to Figure 6, a modification to the second embodiment is shown therein. The braking surface 114a of the fixed part 114 includes an annular locating channel 114b in to which the ball bearings 200 extend. This arrangement allows for slight distortions to be accommodated without fundamentally affecting performance. It also allows for axial loads to be taken by the ball bearings 200 with the result that simplified bearing arrangements could be used.

Although the modification shown in Figure 6 is applied to the second embodiment, it will of course be appreciated that it could also be applied to the first embodiment. In this case, however, it would be preferable to utilise ball bearings in the first embodiment in place of the rollers 52. However, rollers 52 having a barrel shape could be utilised.

To assist the braking action of the invention, the braking surface 14a, 114a of the fixed part 14, 114 may be suitably treated with a friction coating or liner.

The embodiments described above are given by way of examples only and various modifications will be apparent to persons skilled in the art without departing from the scope of the invention. For example, the coupling members could be carried by the driven part.

## Claims

1. A rotary coupling comprising a driving part (10;110) and a driven part (12;112), for transmission of driving torque between them; a fixed part (14;114) in which the driving and driven parts (10,12;110,112) are each rotatable coaxially; and a set of coupling members (52;200) each having a circular or substantially circular transverse cross-section, the coupling members (52;200) being carried by the driving part (10;110) and being seated in recesses (50;144) in the driven part (12;112) so as to be in torque-transmitting engagement therewith, the coupling members (52;200) being juxtaposed to an annular braking surface (14a;114a) of the fixed part (14;114), each coupling member (52;200) being free to independently move, with respect to the driving and driven parts (10,12;110,112), into and out of engagement with the braking surface (14a;114a), and the arrangement being such that a driving torque, applied by the driving part (10;110) to the coupling members (52;200), is transmitted by the latter to the driven part (12;112) without engagement of the coupling members (52;200) with the braking surface (14a;114a); but a reverse torque, applied by the driven part (12;112) to the coupling members (52,200), tends to move the latter into wedging engagement with the braking surface (14a;114a) so as to lock up the coupling.

2. A coupling according to claim 1, wherein the coupling members (52;200) are balls or rollers.

3. A coupling according to claim 2, wherein each ball or roller defines a point (200a), or axis (54) parallel to the axis of the fixed part, about which a moment can be taken, and each ball or roller is engaged by the driving part (10;110) for transmission of the driving torque by a generally tangential thrust applied in a radial zone closer to the moment point (200a) or moment axis (54) than a radial zone in which the coupling member (52;200) engages the driven part (12;112).

4. A coupling according to any one of the preceding claims, wherein the driving part (10;110) includes a planet carrier (38;146) coaxial with the fixed part (14;114), the planet carrier (38:146) having seatings (42;148) in which the coupling members (52;200) are free to move in a radial plane and which apply the driving torque, and wherein the coupling members (52;200) project towards the axis of the fixed part (14:114) into the zone of their engagement with the driven part (12;112).

5. A coupling according to any one of the preceding claims, wherein the recesses (50:144) of the driven part (12;112) have a part-sinusoidal profile.

6. A coupling as claimed in claim 5, wherein the base (50a) of each recess (50) is arcuate with a radius matching that of a respective coupling member (52).

7. A coupling according to any one of the preceding claims, wherein the driven part (12) has a radial flange (48) interrupted by the said recesses (50).

8. A coupling according to any one of the preceding claims, wherein each coupling member (52;200) has a wedging surface (66;166) facing the adjacent braking surface (14a;114a) of the fixed part (14;114).

9. A coupling as claimed in claim 8, wherein each said wedging surface (66;166) is arcuate in cross section and of smaller radius than the braking surface (14a;114a).

10. A coupling according to any one of the preceding claims, wherein at least a part of the driving part (110) or the driven part (112) is pivotable about a point (C) on its rotational axis (110a,124a) which lies or substantially lies on the rotational axis of the other part.

11. A coupling as claimed in claim 10, wherein, when the coupling members (200) are the balls, the pivotable part forms part of a constant velocity joint.

12. A coupling as claimed in claim 11, wherein the driven part (112) includes the constant velocity joint.

13. A coupling according to any one of claims 10 to 12, wherein the pivotable part has a ball end part (130) having the said recess (144) which are in the form of channels for engagement by the coupling members (200), the channels being configured for independent movement of the coupling members (200) in two dimensions relative to the ball end part (130).

14. A coupling according to any one of the preceding claims, wherein the fixed part (114) includes an annular channel (114b) in to which the coupling members (200) extend.

15. A coupling according to any one of the preceding claims, having a friction surface on the said braking surface (14a;114a).
